(19) **Europäisches Patentamt / European Patent Office / Office européen des brevets**

(11) **EP 4 567 635 A2**

(12) **EUROPEAN PATENT APPLICATION**

(43) Date of publication:
**11.06.2025 Bulletin 2025/24**

(21) Application number: **25172443.1**

(22) Date of filing: **24.04.2025**

(51) International Patent Classification (IPC):
**G06F 17/16** (2006.01)    **G06F 7/00** (2006.01)

(52) Cooperative Patent Classification (CPC):
**G06F 17/16; G06F 7/483; G06F 7/5443**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.07.2024 CN 202410977990**

(71) Applicant: **KunlunXin Technology (Beijing) Company Limited**
**Haidian District**
**Beijing 100101 (CN)**

(72) Inventors:
• **ZHANG, Hui**
  **BEIJING, 100101 (CN)**
• **ZHANG, Xinyi**
  **BEIJING, 100101 (CN)**
• **WANG, Jing**
  **BEIJING, 100101 (CN)**
• **QI, Wei**
  **BEIJING, 100101 (CN)**
• **OUYANG, Jian**
  **BEIJING, 100101 (CN)**

(74) Representative: **Laqua, Bernd Christian Kurt**
**Wuesthoff & Wuesthoff**
**Patentanwälte und Rechtsanwalt PartG mbB**
**Schweigerstraße 2**
**81541 München (DE)**

(54) **DEVICE, CHIP, AND METHOD FOR DATA PROCESSING**

(57)    The present disclosure provides a device, a chip, and a method for data processing, and relates to the technical field of artificial intelligence, in particular to the technical fields of neural networks, deep learning, artificial intelligence chips, etc. The device includes: a data transmission unit for receiving a plurality of groups of quantized data corresponding to a plurality of first matrix elements, each of the groups of quantized data including a quantization parameter and k first matrix elements in a first low-precision format; and converting the format of the k first matrix elements into a first high-precision format; and a systolic array including a processing element, the processing element including: an arithmetic logic unit for calculating an accumulated sum of the element products of k first matrix elements in the first high-precision format multiplied by corresponding k second matrix elements; and a k-dimensional accumulator configured to calculate, by a floating-point multiplication unit arranged therein, a product of the quantization parameter included in each of the groups of quantized data multiplied by the corresponding accumulated sum, and to perform accumulation.

FIG. 1

## Description

### TECHNICAL FIELD

The present disclosure relates to the technical field of artificial intelligence, in particular to the technical fields of neural networks, deep learning, artificial intelligence chips, etc., and specifically to a data processing device, an integrated circuit chip, a data processing method, an electronic device, a computer-readable storage medium, and a computer program product.

### BACKGROUND

Artificial intelligence is a scientific subject on making a computer simulate some thinking processes and intelligent behaviors (such as learning, training of neural network models, thinking, and planning) of a human, and involves both hardware-level technologies and software-level technologies. Artificial intelligence hardware technologies generally include the technologies such as sensors, dedicated artificial intelligence chips, cloud computing, distributed storage, and big data processing. Artificial intelligence software technologies mainly include the following several general directions: natural language processing technologies, computer vision technologies, speech recognition technologies and machine learning/deep learning, big data processing technologies, and knowledge graph technologies.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

The present disclosure provides a data processing device, an integrated circuit chip, a data processing method, an electronic device, a computer-readable storage medium, and a computer program product.

According to an aspect of the present disclosure, a data processing device is provided for performing matrix calculation between a plurality of first matrix elements and a plurality of second matrix elements. The device includes: a data transmission unit configured to: receive a plurality of groups of quantized data corresponding to the plurality of first matrix elements from an external memory, each group of quantized data of the plurality of groups of quantized data including a quantization parameter and k first matrix elements in a first low-precision format; perform format conversion on the k first matrix elements in the first low-precision format to obtain k first matrix elements in a first high-precision format; and a systolic array including: a processing element comprising: an arithmetic logic unit configured to calculate, for each group of quantized data of the plurality of groups of quantized data, an accumulated sum of element products of k first matrix elements in the first high-precision format corresponding to the group of quantized data multiplied by corresponding k second matrix elements of the plurality of second matrix elements; and a k-dimensional accumulator including a floating-point multiplication unit, where the k-dimensional accumulator is configured to: calculate, using the floating-point multiplication unit, a plurality of products of: the quantization parameter included in each group of quantized data of the plurality of groups of quantized data; and the accumulated sum corresponding to the group of quantized data; and perform accumulation to the plurality of products, to obtain a result of the matrix calculation between the plurality of first matrix elements and the plurality of second matrix elements.

According to another aspect of the present disclosure, an integrated circuit chip is provided, including the data processing device described above.

According to another aspect of the present disclosure, a data processing method is provided, for performing matrix calculation between a plurality of first matrix elements and a plurality of second matrix elements by a data processing device, the data processing device including a data transmission unit and a systolic array, the systolic array including a processing element, the processing element including an arithmetic logic unit and a k-dimensional accumulator, wherein the k-dimensional accumulator includes a floating-point multiplication unit. The method includes: receiving a plurality of groups of quantized data corresponding to the plurality of first matrix elements from an external memory via the data transmission unit, each group of quantized data of the plurality of groups of quantized data including a quantization parameter and k first matrix elements in a first low-precision format; performing format conversion on the k first matrix elements in the first low-precision format by the data transmission unit, to obtain k first matrix elements in a first high-precision format; calculating, for each group of quantized data of the plurality of groups of quantized data in sequence, an accumulated sum of element products of k first matrix elements in the first high-precision format corresponding to the group of quantized data multiplied by corresponding k second matrix elements by the arithmetic logic unit; and calculating, by the floating-point multiplication unit, a plurality of products of: the quantization parameter included in each group of quantized data of the plurality of groups of quantized data; and the accumulated sum corresponding to the group of quantized data; performing accumulation to the plurality of products, to obtain a result of the matrix calculation between the plurality of first matrix elements and the plurality of second matrix elements.

According to another aspect of the present disclosure, an electronic device is provided, including: at least one processor; and a memory communicatively connected to the at least one processor, where the memory stores instructions executable by the at least one processor, and the instructions, when executed by the at least one processor, cause the at least one processor to perform the method described above.

According to another aspect of the present disclosure, a non-transitory computer-readable storage medium storing computer instructions is provided, where the computer instructions are used to cause a computer to perform the method described above.

According to another aspect of the present disclosure, a computer program product is provided, including a computer program, where when the computer program is executed by a processor, the method described above is implemented.

According to one or more embodiments of the present disclosure, the data processing device provided by the present disclosure converts quantized first matrix elements in a first low-precision format into a first high-precision format using a data transmission unit, and directly performs element multiplication and accumulated sum calculations without dequantization, and then calculates the product of the accumulated sum multiplied by the quantization parameter corresponding to each group of quantized data by a floating-point multiplication unit additionally arranged in a k-dimensional accumulator and performs accumulation, thereby eliminating the need to complete the time-consuming and resource-intensive dequantization operation before matrix calculation, which reduces the consumption of computing resources and improves the efficiency of matrix calculation.

It should be understood that the content described in this section is not intended to identify critical or important features of the embodiments of the present disclosure, and is also not intended to limit the scope of the present disclosure. Other features of the present disclosure will be readily understood with reference to the following description.

## BRIEF DESCRIPTION OF THE DRAWINGS

The accompanying drawings show exemplary embodiments and form a part of the specification, and are used to explain exemplary implementations of the embodiments together with the written description of the specification. The embodiments shown are merely for illustrative purposes and do not limit the scope of the claims. Throughout the accompanying drawings, the same reference numerals denote similar but not necessarily same elements.

FIG. 1 is a block diagram of the structure of a data processing device according to an exemplary embodiment of the present disclosure;

FIG. 2 is a flowchart of a quantization operation according to an exemplary embodiment of the present disclosure;

FIG. 3 is a block diagram of the structure of an integrated circuit chip according to an exemplary embodiment of the present disclosure;

FIG. 4 is a flowchart of a data processing method according to an exemplary embodiment of the present disclosure; and

FIG. 5 is a block diagram of the structure of an exemplary electronic device that can be used to implement an embodiment of the present disclosure.

## DETAILED DESCRIPTION

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described here, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from another. In some examples, a first element and a second element may refer to a same instance of the element, and in some cases, based on contextual descriptions, the first element and the second element may also refer to different instances.

The terms used in the description of the various examples in the disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of the listed terms.

With the rise of large language models (LLMs) in recent years, a parameter number of billions or even hundreds of billions has become the standard configuration of LLMs. Many companies pre-train large-scale models on their own and fine-tune the models according to different tasks and application scenarios. However, the training and fine-tuning processes place extremely high demands on hardware resources. Applying quantization technology to the model training and fine-tuning processes can significantly reduce the hardware resources required for training large-scale models.

Currently, the model training process usually uses a relatively high-precision floating-point format. However, high precision usually means high bit width, which increases the pressure on hardware resources. In the processes of training and fine-tuning, quantizing the high-precision floating-point format into a low-precision specific format can reduce the hardware requirements and reduce the deployment pressure of large models.

In the related art, before performing matrix calculation, it is required to dequantize the quantized data in the low-precision specific format into a high-precision format with high bit width, but the dequantization process is very time-consuming and occupies a large amount of hardware resources.

In order to solve the problems described above, the data processing device provided by the present disclosure converts quantized first matrix elements in a first low-precision format into a first high-precision format using a data transmission unit, and directly performs element multiplication and accumulated sum calculations without dequantization, and then calculates the product of the accumulated sum multiplied by the quantization parameter corresponding to each group of quantized data by a floating-point multiplication unit additionally arranged in a k-dimensional accumulator and performs accumulation, thereby eliminating the need to complete the time-consuming and resource-intensive dequantization operation before matrix calculation, which reduces the consumption of computing resources and improves the efficiency of matrix calculation.

The embodiments of the present disclosure will be described below in detail with reference to the accompanying drawings.

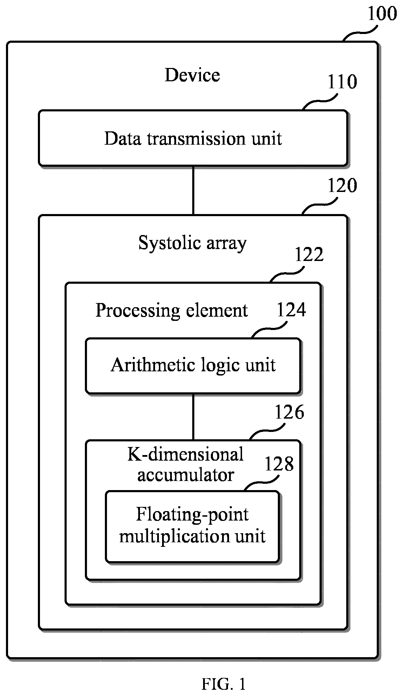

According to an aspect of the present disclosure, a data processing device is provided. FIG. 1 is a block diagram of the structure of a data processing device 100 according to an exemplary embodiment of the present disclosure. The data processing device 100 is used to perform matrix calculation between a plurality of first matrix elements and a plurality of second matrix elements. As shown in FIG. 1, the data processing device 100 includes: a data transmission unit 110 configured to: receive a plurality of groups of quantized data corresponding to the plurality of first matrix elements from an external memory, each of the groups of quantized data including a quantization parameter and k first matrix elements in a first low-precision format; perform format conversion on the k first matrix elements in the first low-precision format to obtain k first matrix elements in a first high-precision format; and a systolic array 120. The systolic array 120 includes: a processing element 122 including: an arithmetic logic unit 124 configured to calculate, for each of the groups of quantized data in sequence, an accumulated sum of the element products of k first matrix elements in the first high-precision format corresponding to the group of quantized data multiplied by corresponding k second matrix elements of the plurality of second matrix elements; and a k-dimensional accumulator 126 including a floating-point multiplication unit 128, the k-dimensional accumulator 126 being configured to calculate a product of the quantization parameter included in each of the groups of quantized data multiplied by the corresponding accumulated sum by the floating-point multiplication unit 128 and perform accumulation, to obtain a result of the matrix calculation between the plurality of first matrix elements and the plurality of second matrix elements.

Thereby, the data processing device provided by the present disclosure converts quantized first matrix elements in a first low-precision format into a first high-precision format using a data transmission unit, and directly performs element multiplication and accumulated sum calculations without dequantization, and then calculates the product of the accumulated sum multiplied by the quantization parameter corresponding to each group of quantized data by a floating-point multiplication unit additionally arranged in a k-dimensional accumulator and performs accumulation, thereby eliminating the need to complete the time-consuming and resource-intensive dequantization operation before matrix calculation, which reduces the consumption of computing resources and improves the efficiency of matrix calculation.

A systolic array is a hardware architecture for efficient parallel computing, which is widely used in the fields of signal processing, image processing, machine learning, etc. Its basic principle is to perform data transmission and calculation at a fixed rhythm (i.e., "systole") through a series of processing elements (PEs), thereby achieving efficient data processing and parallel computing. Systolic array is particularly suitable for linear algebra operations such as matrix multiplication, etc. Each processing element is responsible for a part of the multiplication and accumulation operations, and the entire matrix multiplication process is completed through data flow.

In a data processing device 100, the processing element 122 included in the systolic array 120 is used to perform matrix calculation (e.g., element multiplication and accumulation calculations) between the plurality of first matrix elements and the plurality of second matrix elements. It is understood that the systolic array may include a plurality of processing elements, each of the processing elements is responsible for performing a matrix calculation between a part (e.g., a row) of first matrix elements in the first matrix and a part (e.g., a column) of second matrix elements in the second matrix, so that the plurality of processing elements can collaboratively complete the matrix calculation between the first matrix and the second matrix.

Various elements in the data processing device will be described in detail below.

The data transmission element 110 is used to receive a plurality of groups of quantized data corresponding to the plurality of first matrix elements from an external memory, each of the groups of quantized data including a quantization parameter and k first matrix elements in a first low-precision format. The plurality of groups of quantized data may be obtained by performing a quantization operation on the plurality of first matrix elements.

In some embodiments, the external memory may adopt a high bandwidth memory (HBM).

In an exemplary embodiment, the plurality of first matrix elements include the following data in a first high-precision format (e.g., Bfloat16): [5, 3, 16, 2, -5, 8, 10, 3], and the preset value of k is 4. Then a plurality of groups of quantization parameters may include:

for a first group of quantized data: the quantization parameter = 16, so that the 4 first matrix elements in the first low-precision format (e.g., NF4) are: [11, 9, 15, 9]; and
for a second group of quantized data: the quantization parameter = 10, so that the 4 first matrix elements in the first low-precision format (e.g., NF4) are: [2, 14, 15, 11].

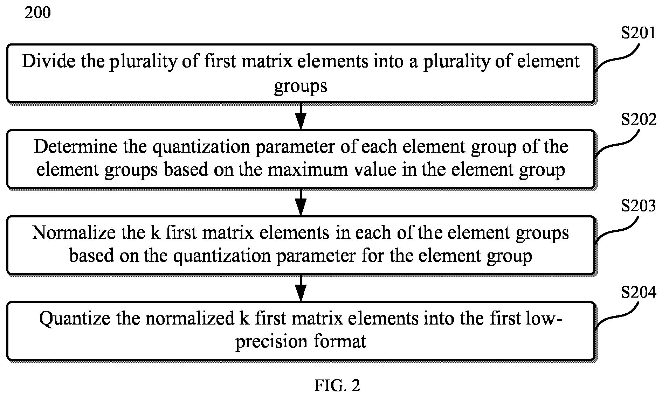

According to some embodiments, as shown in FIG. 2, a quantization operation 200 may include the following steps: Step S201: Divide the plurality of first matrix elements into a plurality of element groups, each of the element groups including k first matrix elements of the plurality of first matrix elements. Step S202: Determining the quantization parameter for each element group of the element groups based on a maximum value in the element group; Step S203: Normalizing the k first matrix elements in each element group of the element groups based on the quantization parameter for the element group. Step S204: Quantizing the normalized k first matrix elements into the first low-precision format.

Thus, the grouping of the plurality of first matrix elements into units of k and their quantization are implemented by the approach described above. In this case, k is a parameter related to the hardware structure of the processing element in the systolic array, which will be described in detail below.

In an exemplary embodiment, the plurality of first matrix elements include the following data in a first high-precision format (e.g., Bfloat16): [5, 3, 16, 2, -5, 8, 10, 3], and the preset value of k is 4. In step S201, the plurality of first matrix elements may be divided into two groups: [5, 3, 16, 2] and [-5, 8, 10, 3]. In the step S202, the respective maximum values of 16 and 10 for the two groups may be used as the quantization parameters for the two groups. In the step S203, the k first matrix elements in each group may be normalized based on the quantization parameter for the group, so as to obtain: [0.3125, 0.1875, 1, 0.125] and [-0.5, 0.8, 1, 0.3]. In the step S204, the normalized first matrix elements may be quantized into a first low-precision format (e.g., NF4), so as to obtain: [11, 9, 15, 9] and [2, 14, 15, 11].

In some embodiments, nonlinear quantization may be used to improve precision, but the low-precision format obtained after the nonlinear quantization cannot be directly processed by hardware. In addition, regardless of whether nonlinear quantization or linear quantization is adopted, since the quantization parameters for the plurality of groups of quantized data are different, the hardware still cannot perform matrix calculation directly, even if the low-precision format is converted into the high-precision format. Therefore, in some embodiments of related art, the data processing device needs to receive the dequantized data or be provided with a dedicated dequantization element so that the element for matrix calculation in the data processing device can use the dequantized data directly.

In an exemplary embodiment, the dequantization operation used in related art may include converting two groups of 4 first matrix elements [11, 9, 15, 9] and [2, 14, 15, 11] in the first low-precision format (e.g., NF4) into the first high-precision format (e.g., Bfloat16): [0.338, 0.161, 1.0, 0.161] and [-0.525, 0.773, 1.0, 0.338]. Furthermore, the quantization parameter included in each of the groups of quantized data is multiplied by the 4 first matrix elements in the first high-precision format to obtain a denormalized result: [5.4, 2.57, 16, 2.57, -5.25, 7.73, 10, 3.38].

However, it should be noted that the data processing device and data processing method provided by the present disclosure complete the format conversion while receiving the data using the data transmission unit 110, without needing to complete the dequantization operation described above using the quantization parameters before the matrix calculation, then directly calculate the accumulated sum of the k element products based on the data in the first high-precision format, which is not multiplied by the quantization parameter, using the arithmetic logic unit of the processing element in the systolic array, multiply the accumulated sum corresponding to each group of quantized data by the quantization parameter included in the group of quantized data using the floating-point multiplication unit additionally arranged in the k-dimensional accumulator, and then perform the accumulation operation. By this means, only the format conversion is required, while the dequantization operation on each quantized data before matrix calculation is unnecessary, and after the matrix calculation, it is only required to calculate the product of the accumulated sum multiplied by the quantization parameter, which greatly reduces the amount of calculation and the hardware resource consumption compared with related art.

As described above, the data transmission unit 110 cannot only be used to receive the plurality of groups of quantized data, but can also be used to perform format conversion on the k first matrix elements in the first low-precision format in each of the groups of quantized data to obtain the k first matrix elements in the first high-precision format.

According to some embodiments, the first low-precision format may be a 4-bit format (for example, NF4) and the first high-precision format may be a 16-bit format (for example, Bfloat16).

In an exemplary embodiment, the data transmission unit 110 may be configured to perform format conversion on two groups of 4 first matrix elements [11, 9, 15, 9] and [2, 14, 15, 11] in the first low-precision format (e.g., NF4) to obtain 4 first matrix elements in the first high-precision format (e.g., Bfloat16): [0.338, 0.161, 1.0, 0.161] and [-0.525, 0.773, 1.0, 0.338].

In some embodiments, the data processing device may be provided with a storage unit. The data transmission unit may store the quantization parameters included in each of the groups of quantized data and the k first matrix elements in the first high-precision format after the format conversion into the storage unit. Before performing matrix calculation, the processing element in the systolic array may fetch the corresponding matrix elements from the storage unit, and the k-dimensional accumulator may fetch quantization parameters from the storage unit.

The arithmetic logic unit 124 in the processing element 122 is configured to calculate, for each of the groups of quantized data in sequence, an accumulated sum of the element products of the k first matrix elements in the first high-precision format corresponding to the group of quantized data multiplied by the corresponding k second matrix elements of the plurality of second matrix elements.

In an exemplary embodiment, the plurality of first matrix elements is a0, a1, ..., a31, the plurality of second matrix elements may be b0, b1, ..., b31, and the matrix calculation between the two may be the accumulated sum of the element products between the two:

$$S = a0 * b0 + a1 * b1 + ... + a31 * b31$$

If k is 16, the plurality of groups of quantized data may include [a0, ..., a15] and [a16, ..., a31] in the first low-precision format. The k second matrix elements corresponding to the k first matrix elements in the first group of quantized data may be [b0, ..., b15], and the k second matrix elements corresponding to the k first matrix elements in the second group of quantized data may be [b16, ..., b31].

The arithmetic logic unit may be configured to calculate, for the first group of quantized data, the accumulated sum of the element products of [a0, ..., a15] (in the first high-precision format) multiplied by [b0, ..., b15], that is, S1 = a0 * b0 + a1 * b1 + ... + a15 * b15; and then calculate, for the second group of quantized data, the accumulated sum of the element products of [a16, ..., a31] (in the first high-precision format) multiplied by [b16, ..., b31], that is, S2 = a16 * b16 + a17 * b17 + ... + a31 * b31

According to some embodiments, the arithmetic logic unit may include: k multipliers, wherein, for the k first matrix elements in the first high-precision format corresponding to a group of quantized data currently being processed, each of the multipliers is configured to calculate an element product of one of the first matrix elements multiplied by the corresponding second matrix element; and an adder tree configured to calculate the accumulated sum of the k element products output by the k multipliers.

By adopting the structure described above, the accumulated sum of the element products of the k first matrix elements in the first high-precision format multiplied by the corresponding k second matrix elements can be obtained quickly and accurately.

In some embodiments, the arithmetic logic unit may also adopt other structures to implement the matrix calculation described above.

Since each group of quantized data only includes quantized data corresponding to a part of the data used for the matrix calculation, it is required to use the k-dimensional accumulator to accumulate the accumulated sums obtained by the arithmetic logic unit for different groups of quantized data, to obtain the result of the matrix calculation. In addition, when the arithmetic logic unit calculates the element products and the accumulated sums described above, the object being operated is the data that is subjected to form conversion without dequantization, therefore the result obtained cannot be used directly. The problem described above can be solved by providing a floating-point multiplication unit in the k-dimensional accumulator, multiplying the accumulated sum of the element products output by the arithmetic logic unit by the corresponding quantization parameter and then performing accumulation. In addition, compared with all other dequantization schemes (for example, multiplying all quantized matrix elements by the quantization parameters, or multiplying other intermediate calculation results by the quantization parameters), multiplying the accumulated sum of the products of k elements by the quantization parameter can minimize the amount of calculation and reduce the time consumption caused by dequantization.

In some embodiments, the first matrix element may represent a weight, and the second matrix element may represent a variable. The k second matrix elements used by the arithmetic logic unit when performing matrix calculation may be unquantized, so as to avoid excessive impact on the calculation precision.

In some embodiments, the quantization and format conversion may also be performed on the second matrix elements in a similar manner as on the first matrix elements. That is, the data transmission unit may be configured to receive a plurality of groups of second quantized data corresponding to the plurality of second matrix elements from an external memory (hereinafter, the quantized data corresponding to the plurality of first matrix elements are referred to as a plurality of groups of first quantized data, and the quantization parameter included therein is referred to as a first quantization parameter), each of the groups of second quantized data including a second quantization parameter and k second matrix elements in a second low-precision format; then, format conversion is performed on the k second matrix elements in the second low-precision format to obtain k second matrix elements in a second high-precision format. Accordingly, the arithmetic logic unit is configured to calculate, for a group of first quantized data and a corresponding group of second quantized data in sequence, an accumulated sum of element products of the k first matrix elements in the first high-precision format and the corresponding k second matrix elements of the plurality of second matrix elements, and the k-dimensional accumulator is configured to calculate a product of the corresponding first quantization parameter multiplied by the second quantization parameter and by the accumulated sum described above by the floating-point multiplication unit and perform accumulation, to obtain the result of the matrix calculation between the plurality of first matrix elements and the plurality of second matrix elements.

During the quantization process, the quantization parameter may also be quantized to further reduce the amount of data. In order to distinguish the quantization parameter for quantizing the matrix elements from the quantization parameter for quantizing the quantization parameter, the former is referred to as the intra-group quantization parameter and the latter is referred to as the global quantization parameter in the present disclosure.

According to some embodiments, the quantization parameter may include an intra-group quantization parameter. Step S202: the determining the quantization parameter for each of the groups based on the maximum value in the group may include: quantizing the maximum value of each of the groups into a second low-precision format based on a global quantization parameter to obtain the intra-group quantization parameter for the group. The k-dimensional accumulator may be configured to calculate a product of the intra-group quantization parameter included in each of the groups of quantized data multiplied by the corresponding accumulated sum by the floating-point multiplication unit and to perform accumulation.

Therefore, the amount of data can be further reduced and the pressure on hardware resources can be reduced by the approach described above.

The data transmission unit can directly receive the dequantized intra-group quantization parameters, or the dequantization operation of the intra-group quantization parameters may be completed by a specific module in the data processing device.

According to some embodiments, the data transmission unit may be configured to: receive the global quantization parameter from an external memory; and perform format conversion on the intra-group quantization parameter to obtain the intra-group quantization parameter in the second high-precision format. The k-dimensional accumulator may be configured to calculate a product of the intra-group quantization parameter included in each of the groups of quantization multiplied by the corresponding accumulated sum and by the global quantization parameter by the floating-point multiplication unit, and to perform accumulation.

Therefore, the operation of dequantization on the intra-group quantization parameter can be further omitted by the approach described above, thereby the calculation efficiency can be further improved and the consumption of hardware resources can be reduced.

According to some embodiments, the second low-precision format may be an 8-bit format and the second high-precision format may be a 16-bit format. The intra-group quantization parameter affects the precision of each matrix element, and there is only one intra-group quantization parameter for a group, therefore the storage can be performed in a relatively high precision. The intra-group quantization parameter is essentially the maximum value among the matrix elements of each group, therefore the corresponding high-precision format can be unified with the high-precision format used for the matrix elements.

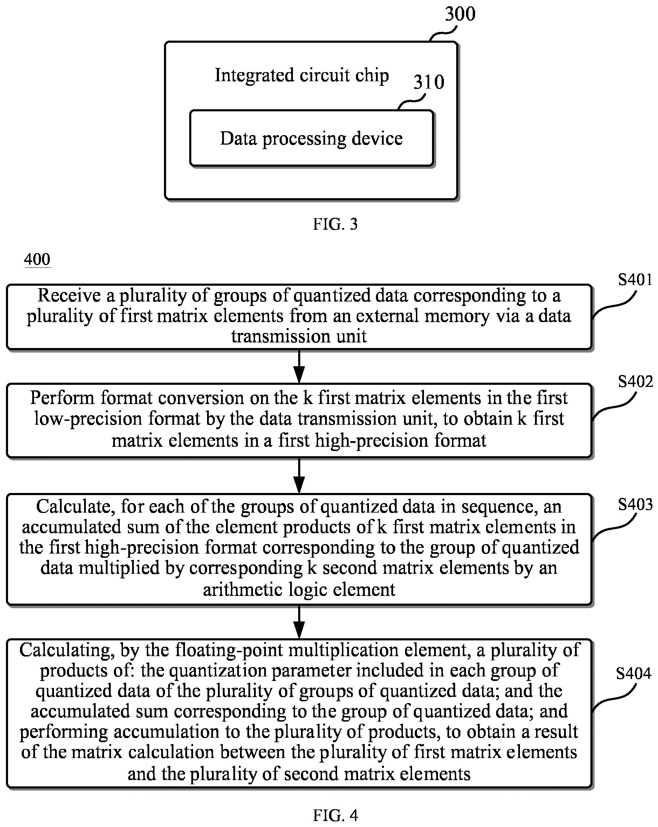

According to another aspect of the present disclosure, an integrated circuit chip is provided. As shown in FIG. 3, an integrated circuit chip 300 may include a data processing device 310. The data processing device 310 may be implemented, for example, by the data processing device 100 described above.

According to another aspect of the present disclosure, a data processing method is provided. The method is used to perform matrix calculation between a plurality of first matrix elements and a plurality of second matrix elements by a data processing device. The data processing device includes a data transmission unit and a systolic array, the systolic array includes a processing element, and the processing element includes an arithmetic logic unit and a k-dimensional accumulator, wherein the k-dimensional accumulator includes a floating-point multiplication unit.

As shown in Fig.4, the data processing method 400 includes: step S401: receiving a plurality of groups of quantized data corresponding to a plurality of first matrix elements from an external memory via the data transmission unit, each of the plurality of groups of quantized data including a quantization parameter and k first matrix elements in a first low-precision format; step S402: performing format conversion on the k first matrix elements in the first low-precision format by the data transmission unit, to obtain k first matrix elements in a first high-precision format; step S403: calculating, for each of the plurality of groups of quantized data in sequence, an accumulated sum of the element products of k first matrix elements in the first high-precision format corresponding to the group of quantized data multiplied by corresponding k second matrix elements by the arithmetic logic unit; and step S404: calculating, by the floating-point multiplication unit, a plurality of products of: the quantization parameter included in each group of quantized data of the plurality of groups of quantized data; and the accumulated sum corresponding to the group of quantized data; and performing accumulation to the plurality of products, to obtain a result of the matrix calculation between the plurality of first matrix elements and the plurality of second matrix elements.

It should be understood that the operations and effects of steps S401 to S404 in the data processing method 400 can be known by referring to the above description of the data transmission unit 110 in the data processing device 100, the arithmetic logic unit 124 and the k-dimensional accumulator 126 included in the processing element 122 in the systolic array 120, which will not be elaborated here.

According to some embodiments, the plurality of groups of quantized data may be obtained by performing a quantization operation on the plurality of first matrix elements. The quantization operation may include: dividing the plurality of first matrix elements into a plurality of groups, each of the groups including k first matrix elements; determining the quantization parameter for each of the groups based on the maximum value in the group; normalizing the k first matrix elements in each of the groups based on the quantization parameter for the group; and quantizing the normalized first matrix elements into the first low-precision format.

According to some embodiments, the first low-precision format may be a 4-bit format and the first high-precision format may be a 16-bit format.

According to some embodiments, the arithmetic logic unit may include: k multipliers, wherein, for the k first matrix elements in the first high-precision format corresponding to a group of quantized data currently being processed, each of the multipliers is configured to calculate an element product of one of the first matrix elements multiplied by the corresponding second matrix element; and an adder tree configured to calculate the accumulated sum of the k element products output by the k multipliers.

According to some embodiments, the quantization parameter may include an intra-group quantization parameter. The determining the quantization parameter for each of the groups based on the maximum value in the group may include: quantizing the maximum value of each of the groups into a second low-precision format based on a global quantization parameter to obtain the intra-group quantization parameter for the group.

According to some embodiments, the data processing method 400 may further include (not shown in the figure): receiving the global quantization parameter from the external memory via the data transmission unit; and performing format conversion on the intra-group quantization parameter by the data transmission unit, to obtain the intra-group quantization parameter in the second high-precision format. Step S404: calculating a product of the quantization parameter included in each of the groups of quantized data multiplied by the corresponding accumulated sum by the floating-point multiplication unit and performing accumulation, to obtain a result of the matrix calculation between the plurality of first matrix elements and the plurality of second matrix elements may comprise: calculating a product of the intra-group quantization parameter included in each of the groups of quantization multiplied by the corresponding accumulated sum and by the global quantization parameter by the floating-point multiplication unit, and performing accumulation.

According to some embodiments, the second low-precision format may be an 8-bit format and the second high-precision format may be a 16-bit format.

According to an embodiment of the present disclosure, an electronic device, a readable storage medium, and a computer program product are further provided.

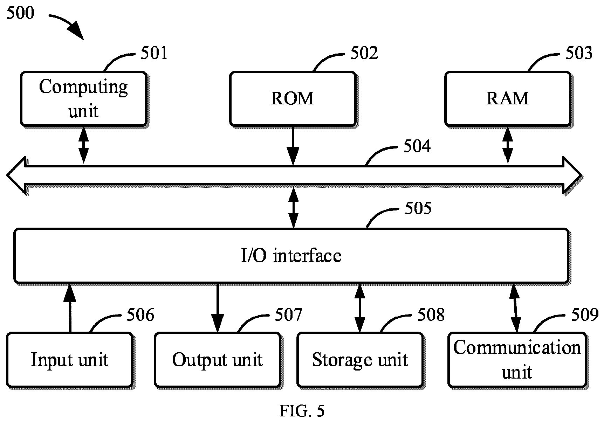

Referring to FIG. 5, a block diagram of the structure of an electronic device 500 will be described below, which can serve as a server or a client of the present disclosure and is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown in the present specification, their connections and relationships, and their functions are merely examples, and are not intended to limit the implementation of the present disclosure described and/or required herein.

As shown in FIG. 5, the electronic device 500 includes a computing unit 501, the computing unit may perform various appropriate actions and processing according to a computer program stored in a read-only memory (ROM) 502 or a computer program loaded from a storage unit 508 to a random access memory (RAM) 503. The RAM 503 may further store various programs and data required for the operation of the electronic device 500. The computing unit 501, the ROM 502, and the RAM 503 are connected to each other through a bus 504. An input/output (I/O) interface 505 is also connected to the bus 504.

A plurality of components in the electronic device 500 are connected to the I/O interface 505, including: an input unit 506, an output unit 507, the storage unit 508, and a communication unit 509. The input unit 506 may be any type of device capable of inputting information to the electronic device 500, the input unit 506 may receive input digit or character information and generate a key signal input related to user settings and/or function control of the electronic device, and may include, but is not limited to, a mouse, a keyboard, a touchscreen, a trackpad, a trackball, a joystick, a microphone, and/or a remote controller. The output unit 507 may be any type of device capable of presenting information, and may include, but is not limited to, a display, a speaker, a video/audio output terminal, a vibrator, and/or a printer. The storage unit 508 may include, but is not limited to, a magnetic disk and an optical disk. The communication unit 509 allows the electronic device 500 to exchange information/data with other devices via a computer network such as the Internet and/or various telecommunication networks, and may include, but is not limited to, a modem, a network interface card, an infrared communication device, a wireless communication transceiver and/or a chipset, for example, a Bluetooth device, an 802.11 device, a Wi-Fi device, a WiMax device, a cellular communication device and/or the like.

The computing unit 501 may be various general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units on which machine learning model algorithms run, a digital signal processor (DSP), and any appropriate processor, controller, microcontroller, etc. The computing unit 501 performs the various methods, processes and/or processing described above. For example, in some embodiments, the methods, processes and/or processing may be implemented as a computer software program, which is tangibly contained in a machine-readable medium, such as in the storage unit 508. In some embodiments, a part or all of the computer program may be loaded and/or installed onto the electronic device 500 via the ROM 502 and/or the communication unit 509. When the computer program is loaded to the RAM 503 and executed by the computing unit 501, one or more steps of the methods, processes and/or processing described above may be performed. Alternatively, in other embodiments, the computing unit 501 may be configured, by any other suitable means (for example, by means of firmware), to perform the methods, processes and/or processing.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data server), in a computing system including a middleware component (for example, an application server), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), the Internet, and a blockchain network.

A computer system may include a client and a server. The client and the server are generally far away from each other and usually interact through a communication network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, successively, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the disclosure. Further, various elements in the embodiments or examples may be combined in various ways. It is important that, as the technology evolves, many elements described herein may be replaced with equivalent elements that appear after the disclosure.

## Claims

1. A data processing device (100) for performing matrix calculation between a plurality of first matrix elements and a plurality of second matrix elements, the device comprising:

   a data transmission unit (110) configured to:

   receive a plurality of groups of quantized data corresponding to the plurality of first matrix elements from an external memory, each group of quantized data of the plurality of groups of quantized data comprising a quantization parameter and k first matrix elements in a first low-precision format; and
   perform format conversion on the k first matrix elements in the first low-precision format to obtain k first matrix elements in a first high-precision format; and

   a systolic array (120) comprising:
   a processing element (122) comprising:

   an arithmetic logic unit (124) configured to calculate, for each group of quantized data of the plurality of groups of quantized data, an accumulated sum of element products of k first matrix elements in the first high-precision format corresponding to the group of quantized data multiplied by corresponding k second matrix elements of the plurality of second matrix elements; and
   a k-dimensional accumulator (126) comprising a floating-point multiplication unit (128), wherein the k-dimensional accumulator is configured to:

   calculate, using the floating-point multiplication unit, a plurality of products of:

   the quantization parameter included in each group of quantized data of the plurality of groups of quantized data; and
   the accumulated sum corresponding to the group of quantized data; and

   perform accumulation to the plurality of products, to obtain a result of the matrix calculation between the plurality of first matrix elements and the plurality of second matrix elements.

2. The data processing device according to claim 1, wherein the plurality of groups of quantized data are obtained by performing a quantization operation on the plurality of first matrix elements, and the quantization operation comprises:

dividing the plurality of first matrix elements into a plurality of element groups, each element group of the element groups comprising k first matrix elements of the plurality of first matrix elements;
determining the quantization parameter for each element group of the element groups based on a maximum value in the element group;
normalizing the k first matrix elements in each element group of the element groups based on the quantization parameter for the element group; and
quantizing the normalized k first matrix elements into the first low-precision format.

3. The data processing device according to claim 2, wherein the quantization parameter includes an intra-group quantization parameter, wherein the determining the quantization parameter for each element group of the element groups based on the maximum value in the group comprises:
quantizing the maximum value of each element group of the element groups into a second low-precision format based on a global quantization parameter, to obtain the intra-group quantization parameter for the element group.

4. The data processing device according to claim 3, wherein the data transmission unit is configured to:

receive the global quantization parameter from an external memory; and
perform format conversion on the intra-group quantization parameter to obtain the intra-group quantization parameter in a second high-precision format,
wherein the plurality of products are calculated, by the floating-point multiplication unit, based on a multiplication of:

the intra-group quantization parameter in the second high-precision format included in each group of quantized data of the plurality of groups of quantized data;
the accumulated sum corresponding to the group of quantized data; and
the global quantization parameter.

5. The data processing device according to any one of claims 1 to 4, wherein the arithmetic logic unit comprises:

k multipliers, wherein, for k first matrix elements in the first high-precision format corresponding to a group of quantized data currently being processed, each multiplier of the k multipliers is configured to calculate an element product of one of the k first matrix elements and a corresponding second matrix element; and
an adder tree configured to calculate an accumulated sum of k element products output by the k multipliers.

6. The data processing device according to any one of claims 1 to 5, wherein the first low-precision format is a 4-bit format and the first high-precision format is a 16-bit format.

7. The data processing device according to claim 4, wherein the second low-precision format is an 8-bit format and the second high-precision format is a 16-bit format.

8. An integrated circuit chip (300), comprising the data processing device (310) according to claim 1.

9. A data processing method (400) for performing matrix calculation between a plurality of first matrix elements and a plurality of second matrix elements by a data processing device, the data processing device comprising a data transmission unit and a systolic array, the systolic array comprising a processing element, the processing element comprising an arithmetic logic unit and a k-dimensional accumulator, wherein the k-dimensional accumulator comprises a floating-point multiplication unit, the method comprising:

receiving (S401) a plurality of groups of quantized data corresponding to the plurality of first matrix elements from an external memory via the data transmission unit, each group of quantized data of the plurality of groups of quantized data comprising a quantization parameter and k first matrix elements in a first low-precision format;
performing (S402) format conversion on the k first matrix elements in the first low-precision format by the data transmission unit, to obtain k first matrix elements in a first high-precision format;
calculating (S403), for each group of quantized data of the plurality of groups of quantized data in sequence, an accumulated sum of element products of k first matrix elements in the first high-precision format corresponding to the group of quantized data multiplied by corresponding k second matrix elements by the arithmetic logic unit; and

calculating (S404), by the floating-point multiplication unit, a plurality of products of:

the quantization parameter included in each group of quantized data of the plurality of groups of quantized data; and
the accumulated sum corresponding to the group of quantized data; and

performing accumulation to the plurality of products, to obtain a result of the matrix calculation between the plurality of first matrix elements and the plurality of second matrix elements.

10. The method according to claim 9, wherein the plurality of groups of quantized data are obtained by performing a quantization operation on the plurality of first matrix elements, and the quantization operation comprises:

dividing the plurality of first matrix elements into a plurality of element groups, each element group of the element groups comprising k first matrix elements of the plurality of first matrix elements;
determining the quantization parameter for each element group of the element groups based on a maximum value in the element group;
normalizing the k first matrix elements in each element group of the element groups based on the quantization parameter for the element group; and
quantizing the normalized k first matrix elements into the first low-precision format.

11. The method according to claim 10, wherein the quantization parameter includes an intra-group quantization parameter, wherein the determining the quantization parameter for each element group of the element groups based on the maximum value in the group comprises:
quantizing the maximum value of each element group of the element groups into a second low-precision format based on a global quantization parameter to obtain the intra-group quantization parameter for the element group.

12. The method according to claim 11, further comprising:

receiving the global quantization parameter from an external memory via the data transmission unit; and
performing format conversion on the intra-group quantization parameter by the data transmission unit, to obtain the intra-group quantization parameter in a second high-precision format,
wherein the plurality of products are calculated, by the floating-point multiplication unit, based on a multiplication of:

the intra-group quantization parameter in the second high-precision format included in each group of quantized data of the plurality of groups of quantized data;
the accumulated sum corresponding to the group of quantized data; and
the global quantization parameter.

13. The method according to any one of claims 9 to 12, wherein the arithmetic logic unit comprises:

k multipliers, wherein, for k first matrix elements in the first high-precision format corresponding to a group of quantized data currently being processed, each multiplier of the k multipliers is configured to calculate an element product of one of the k first matrix elements and a corresponding second matrix element; and
an adder tree configured to calculate an accumulated sum of k element products output by the k multipliers.

14. The method according to any one of claims 9 to 13, wherein the first low-precision format is a 4-bit format and the first high-precision format is a 16-bit format.

15. The method according to claim 12, wherein the second low-precision format is an 8-bit format and the second high-precision format is a 16-bit format.

100

Device

110

Data transmission unit

120

Systolic array

122

Processing element    124

Arithmetic logic unit

126

K-dimensional
accumulator    128

Floating-point
multiplication unit

FIG. 1

200

S201

Divide the plurality of first matrix elements into a plurality of element groups

S202

Determine the quantization parameter of each element group of the element groups based on the maximum value in the element group

S203

Normalize the k first matrix elements in each of the element groups based on the quantization parameter for the element group

S204

Quantize the normalized k first matrix elements into the first low-precision format

FIG. 2

300

Integrated circuit chip  310

Data processing device

FIG. 3

400

S401
Receive a plurality of groups of quantized data corresponding to a plurality of first matrix elements from an external memory via a data transmission unit

S402
Perform format conversion on the k first matrix elements in the first low-precision format by the data transmission unit, to obtain k first matrix elements in a first high-precision format

S403
Calculate, for each of the groups of quantized data in sequence, an accumulated sum of the element products of k first matrix elements in the first high-precision format corresponding to the group of quantized data multiplied by corresponding k second matrix elements by an arithmetic logic element

S404
Calculating, by the floating-point multiplication element, a plurality of products of: the quantization parameter included in each group of quantized data of the plurality of groups of quantized data; and the accumulated sum corresponding to the group of quantized data; and performing accumulation to the plurality of products, to obtain a result of the matrix calculation between the plurality of first matrix elements and the plurality of second matrix elements

FIG. 4

500

501
Computing unit

502
ROM

503
RAM

504

505
I/O interface

506
Input unit

507
Output unit

508
Storage unit

509
Communication unit

FIG. 5